# EUROPÄISCHE PATENTSCHRIFT

(11) **EP 1 008 472 B1**
(45) Veröffentlichungstag und Bekanntmachung des Hinweises auf die Patenterteilung: **11.09.2002**
(21) Anmeldenummer: 98123639.1
(22) Anmeldetag: 10.12.1998
(51) Int. Cl.: B60H 1/03, B60H 1/22, B23P 15/26, F24H 1/22

(54) **Verfahren zum Herstellen eines Glühkerzen-Zusatzheizelementes für Kraftfahrzeuge**
Method for producing a supplementary glow plug heating element for motor vehicles
Procédé de fabrication d'un élément de chauffage auxiliaire de bougie à incandescence pour véhicules à moteur

(43) Veröffentlichungstag der Anmeldung: 14.06.2000
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: Klotten Thomas, 50827 Köln (DE); Abbott, Paul, Hatfield, Peverel, Essex CM3 2ET (GB); Miculek, Franticek, 74201 Suchdol n/O (CZ)
(74) Vertreter: Messulam, Alec Moses

(56) Entgegenhaltungen:
- DE-U- 29 806 616
- FR-A- 2 763 361

## Beschreibung

Die Erfindung bezieht sich auf ein Verfahren zur Herstellung eines Glühkerzen-Zusatzheizelementes für Kraftfahrzeuge mit einem im wesentlichen zylindrischen Hauptkörper mit Anschlußenden, in dem eine Anzahl von Glühkerzen radial ins Innere einragend angeordnet sind.

Aus der DE 298 06 616 U1 ist eine Heizröhre zum vorbereitenden Beheizen des Innenraumes eines Kraftfahrzeuges bekannt, die etwa einen solchen Aufbau aufweist.

Bei der bekannten Heizröhre ist nachteilig, daß diese zur Vorbereitung der Beheizung des Innenraumes eingesetzt werden soll, wodurch die Glühkerzen bei stillstehender Brennkraftmaschine nur von der Batterie des Kraftfahrzeuges betrieben werden, was zu einer frühzeitigen Entladung der Batterie führen kann, wodurch nachfolgend Probleme beim Starten der Brennkraftmaschine auftreten können.

Über eine zweckmäßige Herstellung einer solchen Heizröhre ist nichts ausgesagt.

Die Aufgabe der Erfindung ist es, ein solches an sich in verschiedenen Ausführungsformen bekanntes Glühkerzen-Zusatzheizelement für Kraftfahrzeuge in besonders kostengünstiger und flexibler Weise herzustellen.

Gemäß der Erfindung wird diese Aufgabe gelöst, indem ein Verfahren zum Herstellen eines Glühkerzen-Zusatzheizelement gemäß dem Oberbegriff des Patentanspruches 1 mit den im Kennzeichenteil des Patentanspruches 1 angegebenen Verfahrensschritten durchgeführt wird.

Mit dem erfindungsgemäßen Verfahren ist eine Herstellung eines solchen Glühkerzen-Zusatzheizelementes mit minimalem Material- und Herstellungskostenaufwand möglich, so daß das fertige Glühkerzen-Zusatzheizelement zu sehr geringen Kosten abgegeben werden kann und dementsprechend in großen Stückzahlen in die Großserienproduktion eingeführt werden kann.

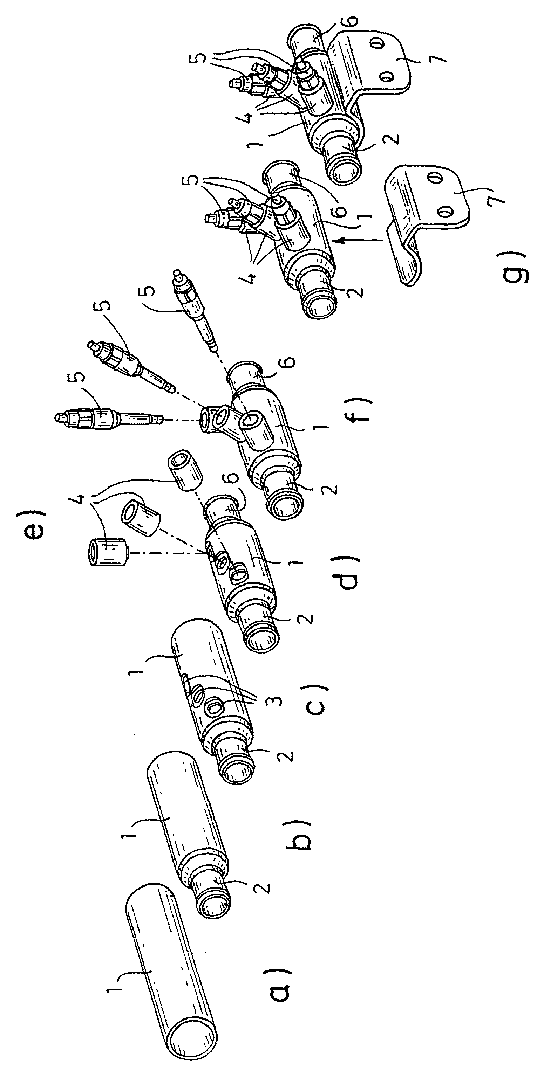

Die Erfindung wird anhand der in der Zeichnung aufgezeigten Verfahrensschritte näher erläutert. Es zeigt:
- Fig.: die einzelnen Verfahrensschritte, ausgehend vom Rohrmaterial über die verschiedenen Zwischenstufen bis zum fertigen Endprodukt.

Das Verfahren zur Herstellung eines Glühkerzen-Zusatzheizelementes für Kraftfahrzeuge beginnt mit dem Verfahrensschritt a) Ablängen eines bestimmten Abschnittes von einem Ausgangs-Rohrmaterial.

Dieser Abschnitt 1 bildet den Hauptkörper 1 des späteren Glühkerzen-Zusatzheizelementes.

Im Verfahrensschritt b) wird an den Abschnitt 1 durch Drücken, Rollen oder dergleichen ein erstes Anschlußende 2 angeformt.

In einem nächsten Verfahrensschritt c) werden Öffnungen 3 zum Einsetzen von Aufnahmebuchsen 4 zur Aufnahme der Glühkerzen 5 durch Stanzen oder Schneiden hergestellt, wobei der Hauptkörper 1 während dieses Verfahrensschrittes durch einen entsprechenden Kern abgestützt ist.

In einem Verfahrensschritt d) wird durch Drücken, Rollen oder dergleichen das zweite Anschlußende 6 angeformt.

In einem weiteren Verfahrensschritt e) werden die als Automatendrehteile hergestellten Aufnahmebuchsen 4 für die Glühkerzen 5 mit dem Hauptkörper 1 verlötet.

In einem weiteren Verfahrensschritt f) können die Glühkerzen 5 in den Aufnahmebuchsen 4 montiert werden.

In einem abschließenden Verfahrensschritt g) wird am Hauptkörper 1 ein Befestigungshalter 7 durch Schweißen befestigt und damit das Endprodukt des Glühkerzen-Zusatzheizelementes fertiggestellt.

Es ist noch darauf hinzuweisen, daß der Befestigungshalter 7 in den unterschiedlichsten Formen ausgebildet werden kann, um den unterschiedlichen Befestigungsverhältnissen in verschiedenen Kraftfahrzeugen Rechnung zu tragen.

In besonders vorteilhafter Weise kann das Glühkerzen-Zusatzheizelement gemäß der Erfindung aus Aluminium-Werkstoffen hergestellt werden, um das im Kraftfahrzeug einzusetzende zusätzliche Gewicht möglichst gering zu halten. Selbstverständlich ist jedoch auch der Einsatz höherwertigerer Materialien, wie Kupfer oder rostfreier Stahl, möglich.

Darüber hinaus besteht noch die Möglichkeit, daß fertige Glühkerzen-Zusatzheizelement mit einer äußeren Isolierung zu versehen, damit die über die Glühkerzen eingebrachte Wärmemenge nicht an die Umgebungsluft verloren geht.

## Patentansprüche

1. Verfahren zum Herstellen eines Glühkerzen-Zusatzheizelementes für Kraftfahrzeuge, mit einem im wesentlichen zylindrischen Hauptkörper (1) mit Anschlußenden (2 und 6) in dem eine Anzahl von Glühkerzen (5) radial ins Innere einragend angeordnet sind,
**gekennzeichnet durch** folgende Verfahrensschritte,
a) Ablängen eines Abschnittes (1) von einem Ausgangs-Rohrmaterial;
b) Anformen eines ersten Anschlußendes (2) **durch** Drücken, Rollen oder dergleichen;
c) Einbringen von Öffnungen (3) zum Einsetzen von Aufnahmebuchsen (4) für die Glühkerzen (5) **durch** Stanzen, Schneiden oder dergleichen bei einem eingesetzten Gegenhalter;
d) Anformen des zweiten Anschlußendes (6) **durch** Drücken, Rollen oder dergleichen;
e) Verbinden der Aufnahmebuchsen (4) für die Glühkerzen (5) mit dem Hauptkörper (1) **durch** Löten oder dergleichen;
f) Montieren der Glühkerzen (5) in den Aufnahmebuchsen (4) und
g) Anschweißen eines Befestigungshalters (7) an den Hauptkörper (1) des Glühkerzen-Zusatzheizelementes.

## Claims

1. Method for producing a supplementary glow plug heating element for motor vehicles with an essentially cylindrical main body (1) with connection ends (2 and ) in which a number of glow plugs (5) are arranged projecting radially into the interior
**characterised by** the following stages
a) cutting to length of a section (1) of an initial pipe material;
b) forming of a first connection end (2) through pressing, rolling or similar;
c) providing openings (3) for the insertion of mounting bushes (4) for the glow plugs (5) through stamping, cutting or similar with an inserted holder-up;
d) forming of the second connection end (6) through pressing, rolling or similar;
e) connection of the mounting bushes (4) for the glow plugs (5) to the main body (1) through soldering or similar;
f) mounting the glow plugs (5) in the receiving bushes (4) and
g) welding of a fixing holder (7) on the main body (1) of the supplementary glow plug heating element.

## Revendications

1. Procédé de fabrication d'un élément de réchauffage additionnel à bougies de préchauffage, pour véhicules automobiles, comportant un corps principal (1) sensiblement cylindrique, muni d'extrémités de raccordement (2 et 6), dans lequel un certain nombre de bougies de préchauffage (5) sont disposées avec pénétration radiale dans l'espace interne,
**caractérisé par** les étapes opératoires suivantes :
a) mise à longueur d'un segment (1) d'un matériau brut de départ ;
b) façonnage d'une première extrémité de raccordement (2) par emboutissage, roulage ou procédé similaire ;
c) usinage d'orifices (3) d'insertion de douilles réceptrices (4) destinées aux bougies de préchauffage (5), par poinçonnage, découpe ou procédé similaire avec intégration d'une pièce de contre-butée ;
d) façonnage de la seconde extrémité de raccordement (6) par emboutissage, roulage ou procédé similaire ;
e) liaison avec le corps principal (1), par brasage ou procédé similaire, des douilles réceptrices (4) affectées aux bougies de préchauffage (5) ;
f) montage des bougies de préchauffage (5) dans les douilles réceptrices (4) ; et
g) soudage rapporté d'un support de fixation (7) sur le corps principal (1) de l'élément de réchauffage additionnel à bougies de préchauffage.
